# EUROPEAN PATENT SPECIFICATION

(11) **EP 1 883 218 B1**
(45) Date of publication and mention of the grant of the patent: **30.06.2010**
(21) Application number: 06118015.4
(22) Date of filing: 27.07.2006
(51) Int. Cl.: H04M 19/04, H04M 1/725

(54) **Speech-based notification on a handheld device**
Auf Sprache arbeitende Mitteilung für tragbare Vorrichtung
Notification basée sur la parole pour appareil portable

(43) Date of publication of application: 30.01.2008
(73) Proprietor: Research In Motion Limited, Waterloo, Ontario N2L 3W8 (CA)
(72) Inventor: Fux, Vadim, Waterloo, Ontario N2K 3P5 (CA); Fedotenko, Dennis, Waterloo, Ontario N2V 2W5 (CA)
(74) Representative: Fennell, Gareth Charles

(56) References cited:
- US-A- 5 696 497
- US-B1- 6 408 187
- KERN N ET AL: "Context-aware notification for wearable computing" WEARABLE COMPUTERS, 2003. PROCEEDINGS. SEVENTH IEEE INTERNATIONAL SYMPOSIUM ON 21-23 OCT. 2003, PISCATAWAY, NJ, USA,IEEE, 21 October 2003 (2003-10-21), pages 223-230, XP010673812 ISBN: 0-7695-2034-0

## Description

### BACKGROUND

### Field

The disclosure relates generally to handheld electronic devices and, more particularly, to a method of generating a particular type of notification on a handheld electronic device when another type of notification may not likely be discerned by a user.

### Background Information

Numerous types of handheld electronic devices are known. Examples of such handheld electronic devices include, for instance, personal data assistants (PDAs), handheld computers, two-way pagers, cellular telephones, and the like. Although some handheld electronic devices are stand-alone devices, many feature wireless communication capability for communication with other devices.

Handheld electronic devices are generally intended to be portable. Many handheld electronic devices are small enough to fit within, for example, a jacket pocket, a belt holster, a briefcase, or a purse. These handheld electronic devices may incorporate a number of output devices (such as, for instance, a speaker, a display, an LED, or a vibrating mechanism) to notify a user of some triggering event (e.g., an incoming communication, an activated calendar entry, etc.). For example, a cellular telephone may produce both an audible tone (e.g., via a speaker) and a vibration (e.g., via a vibrating mechanism) to notify the user that an incoming call is being (or has been) received.

There may be instances, however, in which these notifications may not be adequate. While driving, for example, a user may engage the handheld electronic device with a "hands-free" device. The handheld electronic device, upon receiving an incoming text message, may attempt to notify the user by, for example, outputting a signal which causes an LED on the device to flash. This notification, however, may not be discerned by the user who is busy driving the automobile and not looking at the handheld electronic device. Even if these notifications succeed in alerting the user that a new text message has been received, the user generally must disengage the handheld electronic device from the hands-free device and actuate a number of keys to retrieve the message. Undesirably, during this time, the user is distracted from the task of safely operating the automobile.

As another example, the handheld electronic device may include a calendar function which allows a user to schedule a number of events (such as, and without limitation, an appointment, anniversary, reminder, task, and/or meeting) therein. When, for instance, the time for a scheduled meeting approaches, the handheld electronic device may attempt to notify the user by causing the words "reminder: meeting" to be output on the device's display. However, the user, busy with some other task, may not discern this notification.

US5696497 relates to a radio arranged to issue a silent alert during a first predetermined time period and an audible alert during a second predetermined time period and to activate an audible alert during inter-coupling with an accessory. US6408187 relates to a device arranged to issue alternative alerts dependent on the proximity of the device to a user. The document "context-aware notification for wearable computing" of Kern et al, Wearable Computers, 2003 proceedings 7th IEEE International Symposium, discloses a notification system based on the interruptability of the user.

It would be desirable to provide an improved handheld electronic device which is structured to provide a particular type of notification when another type of notification may be unlikely to be discerned by a user. The invention is set out in the claims.

### BRIEF DESCRIPTION OF THE DRAWINGS

A full understanding can be gained from the following Description of the Preferred Embodiment when read in conjunction with the accompanying drawings in which:
Figure 1 is a top plan view of an improved handheld electronic device.
Figure 2 is a schematic depiction of the handheld electronic device of Figure 1.
Figure 3 is an exemplary flowchart depicting certain aspects of the speech-based notification function that can be executed on the handheld electronic device of Figure 1.

Similar numerals refer to similar parts throughout the specification.

### DESCRIPTION OF THE PREFERRED EMBODIMENT

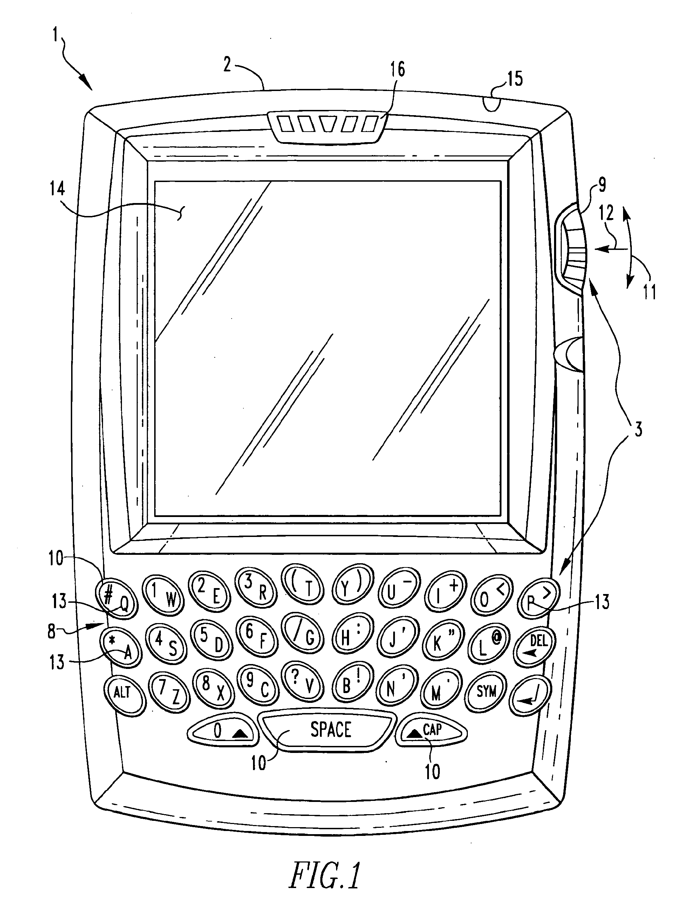

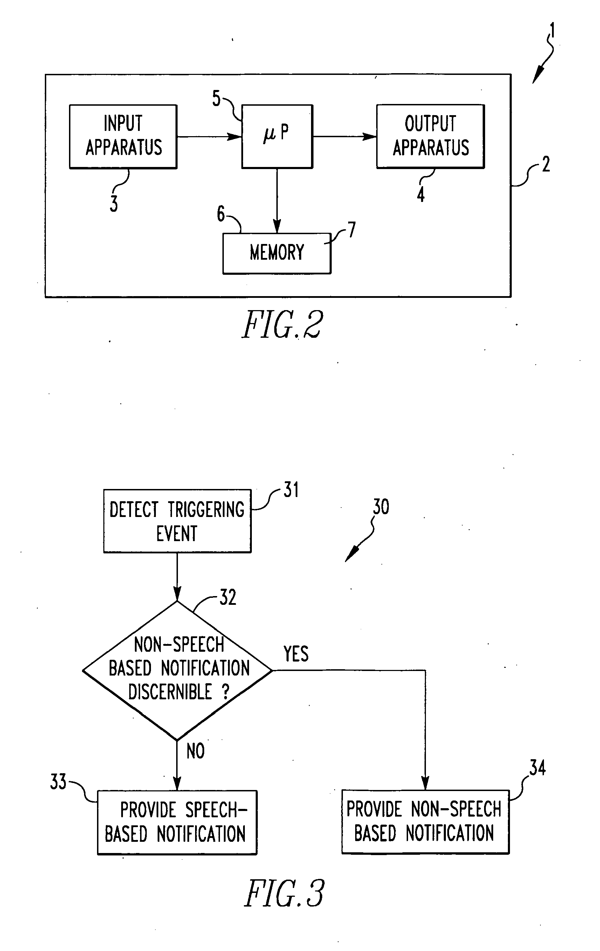

An improved handheld electronic device 1 is indicated generally in Figure 1 and is depicted schematically in Figure 2. The exemplary handheld electronic device 1 includes a housing 2 upon which is disposed a processor unit that includes an input electronic device 1 is structured such that the processor 5 recognizes, as an input thereof, one of the number of linguistic elements 13 disposed on an actuated key 10. For example, when a user is composing a message and actuates the key having the linguistic elements 13 "Q" and "#" disposed thereon, the processor 5 is structured to recognize that the user is attempting to insert the letter "Q" or the symbol "#" into the message.

The memory 6 can be any one or more of a variety of types of internal and/or external storage media such as, without limitation, RAM, ROM, EPROM(s), EEPROM(s), and the like that provide a storage register for data storage such as in the fashion of an internal storage area of a computer, and can be volatile memory or nonvolatile memory. The memory 6 includes a number of routines depicted generally with the numeral 7 for the processing of data. The routines 7 can be in any of a variety of forms such as, without limitation, software, firmware, and the like. As will be explained in greater detail below, the routines 7 include a speech-based notification function as an application, as well as other routines.

An operational process 30 for implementing the speech-based notification function on the handheld electronic device 1 is illustrated in Figure 3. Operational process 30 is initiated when the handheld electronic device 1 detects a triggering event at operation 31. A triggering event may include, for example and without limitation, an incoming communication and/or an activated calendar entry. Generally as used herein, an incoming communication could refer to a text-based message, a voice-based message, and/or a data-based message which is being received, and/or which has recently been received, by the handheld electronic device 1. Furthermore, as used herein, an activated calendar entry can refer to, for example and without limitation, an impending appointment, anniversary, reminder, task, and/or meeting which typically generates an alarm and/or notification on the handheld electronic device 1.

After a triggering event is detected in operation 31, a determination is made at operation 32 as to whether a non-speech based notification (e.g., an illuminated LED 15, a prompt on display 14, etc.) may be discernible by the user. The non-speech based notification may be deemed to not be discernible if, for example and without limitation, it is detected that the handheld electronic device 1 is engaged with a holster, a cradle, a charging device, or a hands-free device, among others. For example, the handheld electronic device 1 may detect engagement with a charging device when the presence of an AC power source is sensed by the handheld electronic device 1. The non-speech based notification may also be deemed to not be discernible, for example and without limitation, if it is detected that the handheld electronic device 1 has been stationary for a predetermined time or if it is detected that the input apparatus 3 of said handheld electronic device 1 has not been actuated for a predetermined time.

If it is determined in operation 32 that the non-speech based notification may be discernible, operational control branches "YES" and passes to operation 34 which provides the non-speech based notification of the triggering event. If it is determined in operation 32 that the non-speech based notification may not be discernible, operational control branches "NO" and passes to operation 33 which provides a speech-based notification of the triggering event as an alternative to the non-speech based notification. More specifically, a speech-based notification is output via speaker 16. Although discussed as an alternative to the non-speech based notification in the current embodiment, it should be recognized that the speech-based notification may be provided in addition to the non-speech based notification.

The speech-based notification may be, for example and without limitation, a predetermined message stored within memory 6 or may be based on the incoming communication. When an incoming email is received, for instance, the predetermined message "incoming email received" may be audibly output as the speech-based notification via speaker 16. Alternatively, the incoming email may be converted from a text-based format to an audible speech-based output which is output as the speech-based notification via speaker 16.

The functioning of operational process 30 may be readily comprehended from the following examples. In the first example, the handheld electronic device 1 is engaged with a holster such as the type worn on a user's belt. An incoming text-based message (e.g., email, SMS, IM, etc.) is received by the handheld electronic device 1. For example, the email "What time is dinner tonight?" is received. Receipt of this email is a triggering event, the detection of which initiates operational process 30 (i.e., at operation 31). Because the handheld electronic device 1 is engaged with the holster, operation 32 determines that the typical non-speech based notification (e.g., a flashing LED 15; a prompt on display 14) may not be discernible by the user. For instance, the flashing LED 15 and prompt on display 14 may not be discerned by the user when the device is in the holster worn on his belt. Accordingly, a speech-based notification is provided (i.e., at operation 33). For example, a predetermined speech-based notification such as "You have received an email" is output through speaker 16. Alternatively, or in addition thereto, the text-base message "What time is dinner tonight?" may be converted to an audible, speech-based message and output through speaker 16 as the spoken words, "What time is dinner tonight?" Additional information, such as the name of the email sender or other information, may also be included in the speech-based notification.

If, however, the handheld electronic device 1 is disengaged from the holster (e.g., the user is holding the handheld electronic device 1) when the email is received, operation 32 may determine that the non-speech based notification (e.g., a flashing LED 15; a prompt on display 14) may be discernible by the user (i.e., the flashing LED 15 or display prompt may be seen by the user). Accordingly, only the non-speech based notification is provided to the user (i.e., at operation 34) in this instance.

As another example, assume that the handheld electronic device 1 is engaged with a charging device on the user's desk. An activated calendar entry (e.g., an entry that a scheduled meeting is about to begin) is detected by the handheld electronic device 1 (i.e., at operation 31). Because the handheld electronic device 1 is engaged with the charging device, it is determined at operation 32 that the non-speech based notification (e.g., a prompt on display 14) may not be discernible by the user. For instance, it might be assumed that the device, while being recharged, is out of the user's direct line of sight. Accordingly, a speech-based notification is provided to the user (i.e., at operation 33). For example, a predetermined speech-based notification such as the spoken words "You have a meeting in ten minutes" is output through speaker 16. In one embodiment, the non-speech based notification (e.g., the prompt on display 14) may also be provided with the speech-based notification.

In the current embodiment, the memory 6 (Figure 2) includes a number of user selectable profiles stored therein. For example, the user may establish a number of profiles which select whether the non-speech based notification and speech-based notification functions are activated/deactivated. More specifically, and without limitation, the user may establish a profile in which the non-speech based notification function is activated and the speech-based notification function is deactivated; the non-speech based notification function is deactivated and the speech-based notification function is activated; both the non-speech based notification and speech-based notification functions are deactivated; or both the non-speech based notification and speech-based notification functions are activated.

Each of the number of profiles may include additional settings therein. Where both non-speech based notification and speech-based notification functions are activated, for example, the user may select additional profile settings such that (without limitation) only a non-speech based notification is provided when it is determined that a non-speech based notification may be discernible by the user and only a speech-based notification is provided when it is determined that a non-speech based notification may not be discernible by the user. Alternatively, the profile settings may be selected such that (without limitation) only a non-speech based notification is provided when it is determined that a non-speech based notification may be discernible by the user and both a non-speech based notification and a speech-based notification are provided when it is determined that a non-speech based notification may not be discernible by the user.

While specific embodiments have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

### Reference Listing:

- handheld electronic device: 1
- housing: 2
- input apparatus: 3
- output apparatus: 4
- processor: 5
- memory: 6
- routine: 7
- keypad: 8
- thumbwheel: 9
- keys: 10
- directional arrow: 11
- directional arrow: 12
- linguistic element: 13
- display: 14
- LED: 15
- Speaker: 16
- Operational Process: 30
- Process Step: 31
- Process Step: 32
- Process Step: 33
- Process Step: 34

## Claims

1. A method for generating a notification on a handheld electronic device, the method comprising:
detecting a triggering event;
detecting that an input apparatus of said handheld electronic device has not been actuated for a predetermined time and determining at least in part therefrom that a non-speech based notification of the triggering event may not be discernible; and
providing an audible and predetermined speech-based notification based on the triggering event.

2. The method of Claim 1, wherein said detecting a triggering event further comprises detecting at least one of an incoming communication and an activated calendar entry.

3. The method of Claim 2, further comprising converting said incoming communication into an audible speech-based output, and outputting the audible speech-based output as an additional audible speech-based notification.

4. The method of Claim 3, further comprising converting, as said incoming communication, a text-based data set.

5. The method of Claim 1, wherein said determining at least in part therefrom further comprises detecting that said handheld electronic device is engaged with at least one of a holster, a cradle, a charging device, and a hands-free device.

6. The method of Claim 1, wherein said determining at least in part therefrom further comprises detecting that said handheld electronic device has not been moved for a predetermined time.

7. A handheld electronic device comprising:
a processor unit comprising a processor, an input apparatus, an output apparatus, and a memory having a routine stored therein, the processor unit being structured to:
detect a triggering event;
detect that an input apparatus of said handheld electronic device has not been actuated for a predetermined time and determine at least in part therefrom that a non-speech based notification of the triggering event may not be discernible; and
provide an audible and predetermined speech-based notification based on the triggering event.

8. The handheld electronic device of Claim 7, wherein said processor unit is further structured to detect as said triggering event at least one of an incoming communication and an activated calendar entry.

9. The handheld electronic device of Claim 8, wherein said processor unit is further structured to convert said incoming communication into an audible speech-based output, and to output said audible speech-based output as an additional audible speech-based notification.

10. The handheld electronic device of Claim 7, wherein said processor unit is further structured to detect that said handheld electronic device is engaged with at least one of a holster, a cradle, a charging device, and an automobile hands-free device.

11. The handheld electronic device of Claim 7, wherein said processor unit is further structured to detect that said handheld electronic device has not been moved for a predetermined time.

## Patentansprüche

1. Verfahren zum Erzeugen einer Benachrichtigung auf einer handgehaltenen elektronischen Vorrichtung, wobei das Verfahren aufweist:
Erfassen eines Auslöseereignisses;
Erfassen, dass eine Eingabevorrichtung der handgehaltenen elektronischen Vorrichtung für eine vorgegebene Zeitdauer nicht betätigt wurde, und Bestimmen zumindest zum Teil daraus, dass eine Nicht-Sprach-basierte Benachrichtigung des Auslöseereignisses nicht wahrnehmbar sein kann; und
Vorsehen einer hörbaren und vorgegebenen Sprach-basierten Benachrichtigung basierend auf dem Auslöseereignis.

2. Verfahren gemäß Anspruch 1, wobei das Erfassen eines Auslöseereignisses weiter aufweist ein Erfassen zumindest eines aus einer ankommenden Kommunikation und einem aktivierten Kalendereintrag.

3. Verfahren gemäß Anspruch 2, das weiter aufweist ein Umwandeln der ankommenden Kommunikation in eine hörbare Sprach-basierte Ausgabe und Ausgeben der hörbaren Sprach-basierten Ausgabe als eine zusätzliche hörbare Sprach-basierte Benachrichtigung.

4. Verfahren gemäß Anspruch 3, das weiter ein Umwandeln, als die ankommende Kommunikation, eines Text-basierenden Datensatzes aufweist.

5. Verfahren gemäß Anspruch 1, wobei das Bestimmen zumindest zum Teil daraus weiter aufweist ein Erfassen, dass die handgehaltene elektronische Vorrichtung mit zumindest einem aus einem Holster, einer Aufnahmevorrichtung, einer Ladevorrichtung und einer Freisprechvorrichtung in Eingriff ist.

6. Verfahren gemäß Anspruch 1, wobei das Bestimmen zumindest zum Teil daraus weiter aufweist ein Erfassen, dass die handgehaltene elektronische Vorrichtung für eine vorbestimmte Zeitdauer nicht bewegt wurde.

7. Handgehaltene elektronische Vorrichtung, die aufweist:
eine Prozessoreinheit, einen Prozessor, eine Eingabevorrichtung, eine Ausgabevorrichtung und einen Speicher mit einer darauf gespeicherten Routine aufweist, wobei die Prozessoreinheit strukturiert ist:
ein Auslöseereignis zu erfassen;
zu erfassen, dass eine Eingabevorrichtung der handgehaltenen elektronischen Vorrichtung für eine vorgegebene Zeitdauer nicht betätigt wurde, und Bestimmen zumindest zum Teil daraus, dass eine Nicht-Sprach-basierte Benachrichtigung des Auslöseereignisses nicht wahrnehmbar sein kann; und
eine hörbare und vorgegebene Sprach-basierten Benachrichtigung basierend auf dem Auslöseereignis vorzusehen.

8. Handgehaltene elektronische Vorrichtung gemäß Anspruch 7, wobei die Prozessoreinheit weiter strukturiert ist, als das Auslöseereignis zumindest eines aus einer ankommenden Kommunikation und einem aktivierten Kalendereintrag zu erfassen.

9. Handgehaltene elektronische Vorrichtung gemäß Anspruch 8, wobei die Prozessoreinheit weiter strukturiert ist, die ankommende Kommunikation in eine hörbare Sprach-basierte Ausgabe umzuwandeln und die hörbare Sprach-basierte Ausgabe als eine zusätzliche hörbare Sprach-basierte Benachrichtigung auszugeben.

10. Handgehaltene elektronische Vorrichtung gemäß Anspruch 7, wobei die Prozessoreinheit weiter strukturiert ist, zu erfassen, dass die handgehaltene elektronische Vorrichtung mit zumindest einem aus einem Holster, einer Aufnahmevorrichtung, einer Ladevorrichtung und einer Automobilfreisprechvorrichtung in Eingriff ist.

11. Handgehaltene elektronische Vorrichtung gemäß Anspruch 7, wobei die Prozessoreinheit weiter strukturiert ist, zu erfassen, dass die handgehaltene elektronische Vorrichtung für eine vorgegebene Zeitdauer nicht bewegt wurde.

## Revendications

1. Procédé destiné à générer une notification sur un dispositif électronique portatif, le procédé comprenant le fait de :
détecter un évènement déclencheur ;
détecter le fait qu'un appareil d'entrée dudit dispositif électronique portatif n'a pas été actionné pendant une durée prédéterminée et en déduire au moins en partie qu'une notification de type non vocal de l'évènement déclencheur peut ne pas être perceptible ; et
fournir une notification de type vocal audible et prédéterminée sur la base de l'évènement déclencheur.

2. Procédé de la revendication 1, dans lequel ladite détection d'un évènement déclencheur comprend en plus la détection d'au moins l'une d'une communication entrante et d'une entrée activée de calendrier.

3. Procédé de la revendication 2, comprenant en plus le fait de convertir ladite communication entrante en une sortie audible de type vocal, et le fait de délivrer en sortie la sortie audible de type vocal comme notification de type vocal additionnelle audible.

4. Procédé de la revendication 3, comprenant en plus le fait de convertir, comme étant ladite communication entrante, un ensemble de données de type texte.

5. Procédé de la revendication 1, dans lequel le fait d'en déduire au moins en partie comprend en plus le fait de détecter que ledit dispositif électronique portatif est engagé avec au moins l'un d'un étui, d'un support, d'un dispositif de chargement et d'un dispositif mains libres.

6. Procédé de la revendication 1, dans lequel le fait d'en déduire au moins en partie comprend en plus le fait de détecter que ledit dispositif électronique portatif n'a pas été déplacé pendant une durée prédéterminée.

7. Dispositif électronique portatif comprenant :
une unité de traitement comprenant un processeur, un appareil d'entrée, un appareil de sortie et une mémoire ayant un sous-programme qui y est stocké, l'unité de traitement étant structurée pour :
détecter un évènement déclencheur ;
détecter qu'un appareil d'entrée dudit dispositif électronique portatif n'a pas été actionné pendant une durée prédéterminée et en déduire au moins en partie qu'une notification de type non vocal de l'évènement déclencheur peut ne pas être perceptible ; et
fournir une notification de type vocal audible et prédéterminée sur la base de l'évènement déclencheur.

8. Dispositif électronique portatif de la revendication 7, dans lequel ladite unité de traitement est en plus structurée pour détecter comme étant ledit évènement déclencheur au moins l'une d'une communication entrante et d'une entrée activée de calendrier.

9. Dispositif électronique portatif de la revendication 8, dans lequel ladite unité de traitement est en plus structurée pour convertir ladite communication entrante en une sortie de type vocal audible, et pour délivrer en sortie ladite sortie de type vocal audible comme notification de type vocal additionnelle audible.

10. Dispositif électronique portatif de la revendication 7, dans lequel ladite unité de traitement est en plus structurée pour détecter que ledit dispositif électronique portatif est engagé avec au moins l'un d'un étui, d'un support, d'un dispositif de chargement et d'un dispositif mains libres de véhicule automobile.

11. Dispositif électronique portatif de la revendication 7, dans lequel ladite unité de traitement est en plus structurée pour détecter que ledit dispositif électronique portatif n'a pas été déplacé pendant une durée prédéterminée.
